(19) Europäisches Patentamt

European Patent Office

Office européen des brevets

(11) **EP 2 262 748 B1**

(12) **FASCICULE DE BREVET EUROPEEN**

(45) Date de publication et mention
de la délivrance du brevet:
**13.06.2018 Bulletin 2018/24**

(21) Numéro de dépôt: **09742253.9**

(22) Date de dépôt: **07.04.2009**

(51) Int Cl.:
*C04B 35/48* [(2006.01)]       *C04B 35/484* [(2006.01)]
*C04B 35/488* [(2006.01)]      *C04B 35/653* [(2006.01)]
*B02C 17/20* [(2006.01)]

(86) Numéro de dépôt international:
**PCT/FR2009/050589**

(87) Numéro de publication internationale:
**WO 2009/136055 (12.11.2009 Gazette 2009/46)**

(54) **PARTICULE EN MATIERE CERAMIQUE FONDUE**

GESCHMOLZENE KERAMISCHE PARTIKEL

FUSED CERAMIC PARTICLE

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **11.04.2008 FR 0852431**

(43) Date de publication de la demande:
**22.12.2010 Bulletin 2010/51**

(73) Titulaire: **Saint-Gobain Centre de Recherches et
d'Etudes
Européen
92400 Courbevoie (FR)**

(72) Inventeurs:
• **BOUSSANT-ROUX, Yves
Lexington, Virginia 02420 (US)**
• **NONNET, Emmanuel
F-84260 Sarrians (FR)**

(74) Mandataire: **Nony
11 rue Saint-Georges
75009 Paris (FR)**

(56) Documents cités:
**EP-A- 0 662 461     WO-A-2008/043966**

**Description**

**Domaine technique**

La présente invention se rapporte à de nouvelles particules, notamment sous forme de billes, en céramique fondues, à un procédé de fabrication de ces billes, et à l'utilisation de ces particules en tant qu'agents de broyage, agents de dispersion en milieu humide ou pour le traitement de surfaces.

**Etat de la technique**

L'industrie minérale met en oeuvre des billes pour le broyage fin de matières prébroyées à sec par des procédés traditionnels, notamment pour le carbonate de calcium, l'oxyde de titane, le gypse, le kaolin et le minerai de fer.

Les industries des peintures, encres, colorants, laques magnétiques, composés agrochimiques utilisent de telles billes pour la dispersion et l'homogénéisation des divers constituants liquides et solides.

L'industrie du traitement de surfaces a enfin recours à ces particules ou billes notamment pour des opérations de nettoyage de moules métalliques (pour la fabrication de bouteilles par exemple), l'ébavurage de pièces, le décalaminage, la préparation d'un support en vue d'un revêtement, le traitement de pré-contraintes (« shot peening »), le conformage de pièces (« peen forming ») ...

Les particules sont classiquement sensiblement sphériques et d'une taille de 0,1 à 4 mm afin de servir l'ensemble des marchés décrits ci-dessus. Pour qu'elles puissent être utilisées dans ces trois types d'applications, elles doivent notamment présenter les propriétés suivantes :

- une inertie chimique et colorante vis-à-vis des produits traités,
- une résistance mécanique aux chocs,
- une résistance à l'usure,
- une faible abrasivité pour le matériel, notamment les organes agitateurs et les cuves, ou les organes de projection, et
- une faible porosité ouverte pour un nettoyage aisé.

On trouve sur le marché, différents types de particules, particulièrement des billes, notamment dans le domaine du microbroyage :

- Le sable à grains arrondis, comme le sable d'OTTAWA par exemple, est un produit naturel et bon marché, mais inadapté aux broyeurs modernes, pressurisés et à fort débit. En effet, le sable est peu résistant, de faible densité, variable en qualité et abrasif pour le matériel.
- Les billes de verre, largement utilisées, présentent une meilleure résistance, une plus faible abrasivité et une disponibilité dans une gamme plus large de diamètres.
- Les billes métalliques, notamment en acier, présentent une inertie insuffisante vis-à-vis des produits traités, entraînant notamment une pollution des charges minérales et un grisaillement des peintures, et une densité trop élevée nécessitant des broyeurs spéciaux impliquant notamment une forte consommation d'énergie, un échauffement important et une sollicitation mécanique élevée du matériel.

On connaît également des billes en matière céramique. Ces billes ont une meilleure résistance que les billes de verre, une densité plus élevée et une excellente inertie chimique. On peut distinguer :

- les billes céramiques frittées, obtenues par un façonnage à froid d'une poudre céramique et puis consolidation par cuisson à haute température, et
- les billes céramiques dites « fondues », généralement obtenues par fusion de composants céramiques, formation de gouttes sphériques à partir de la matière en fusion, puis solidification desdites gouttes.

La grande majorité des billes fondues ont une composition du type zircone-silice ($ZrO_2$ - $SiO_2$) où la zircone est cristallisée sous forme monoclinique et/ou partiellement stabilisée (par des ajouts adaptés), et la silice ainsi qu'une partie des additifs éventuels forment une phase vitreuse liant les cristaux de zircone. Les billes céramiques fondues offrent des propriétés optimales pour le broyage, à savoir une bonne résistance mécanique, une densité élevée, une inertie chimique et une abrasivité faibles vis-à-vis du matériel de broyage.

Des billes céramiques fondues à base de zircone et leur utilisation pour le broyage et la dispersion sont par exemple décrites dans FR 2 320 276 et EP 0 662 461. Ces documents décrivent l'influence de $SiO_2$, $Al_2O_3$, MgO, CaO, $Y_2O_3$, $CeO_2$, et $Na_2O$ sur les principales propriétés, notamment sur les propriétés de résistance à l'écrasement et de résistance à l'abrasion. L'exemple 11 de EP 0 662 461 présente une teneur en zircone supérieure à 70% et une teneur en MgO inférieure à 6,5%.

WO 2008/043966, publié le 17 avril 2008, décrit des particules fondues, sans évoquer un ajout d'oxyde d'yttrium.

Bien que les billes en céramique fondues de l'art antérieur soient de bonne qualité, l'industrie a toujours besoin de produits de qualité encore meilleure. En effet, les conditions de broyage sont toujours plus exigeantes et il est nécessaire, afin de diminuer les coûts d'exploitation, d'augmenter les rendements des appareils utilisés. En particulier, il est souhaitable de diminuer les durées d'indisponibilité de ces appareils.

L'invention vise à satisfaire ces besoins en fournissant des particules en céramique fondues qui, outre les qualités requises citées ci-dessus, présentent une excellente résistance à la casse ou un compromis remarquable entre résistance à l'usure et résistance à la casse.

### Résumé de l'invention

L'invention concerne une nouvelle particule céramique fondue, de préférence sous forme d'une bille, présentant la composition chimique suivante, en pourcentages en masse sur la base des oxydes et pour un total de 100% :

$$50\ \% < ZrO_2 + HfO_2 < 70\% \ ;$$

$$10\ \% < SiO_2 < 30\% \ ;$$

$$6,5\% < MgO < 9,5\% \ ;$$

$Al_2O_3$ en une quantité telle que le rapport en masse $MgO / Al_2O_3$ soit compris entre 2,4 et 6,6 ;

$$\geq 0,25\ \% \qquad \geq \cancel{0,1\%} \quad < Y_2O_3 \ ;$$

$$CeO_2 < 10\% \ ;$$

et moins de 0,6% d'autres oxydes.

Les inventeurs ont trouvé, de façon inattendue, que la présence de magnésie (MgO), d'alumine ($Al_2O_3$) et d'oxyde d'yttrium ($Y_2O_3$) dans les proportions susmentionnées améliore notablement les propriétés des particules en céramique fondues, notamment par comparaison aux particules décrites dans FR 2 320 276. En particulier, on obtient des particules plus résistantes à la casse en utilisation.

Les particules selon l'invention sont ainsi particulièrement bien adaptées à des applications de dispersion en milieu humide, de micro broyage et de traitement de surfaces. Dans l'application au broyage, les particules selon l'invention présentent une résistance à la casse améliorée au démarrage et en utilisation.

L'invention concerne également un ensemble de particules comprenant plus de 90%, de préférence plus de 95%, de préférence environ 100%, en pourcentages en masse, de particules selon l'invention.

L'invention concerne également un procédé de fabrication de particules fondues selon l'invention, notamment de billes fondues, comprenant les étapes successives suivantes :

a) mélange de matières premières pour former une charge de départ ;
b) fusion de la charge de départ jusqu'à obtention d'une matière en fusion,
c) dispersion de ladite matière en fusion sous forme de gouttelettes liquides et solidification de ces gouttelettes liquides sous forme de particules (notamment de billes) solides.

Selon l'invention, les matières premières sont choisies à l'étape a) de manière que les particules obtenues à l'étape c) soient conformes à l'invention. De préférence, de l'oxyde d'yttrium, voire de l'oxyde de cérium, est ajouté de façon volontaire et systématique dans la charge de départ, sous la forme oxyde ou sous la forme d'un précurseur d'oxyde, de préférence sous la forme oxyde, de manière à garantir cette conformité.

L'invention concerne enfin l'utilisation d'une pluralité de particules, notamment de billes selon l'invention, ou de billes fabriquées suivant un procédé selon l'invention, en tant qu'agents de broyage ; agents de dispersion en milieu humide ; agents de soutènement, en anglais « propping agents », notamment pour empêcher la fermeture des fractures géologiques profondes créées dans les parois d'un puits d'extraction, en particulier de pétrole ; agents d'échange thermique par exemple pour lit fluidisé ; ou pour le traitement de surfaces.

## Définitions

- Par « particule », on entend un produit solide individualisé dans une poudre.
- Par « bille », on entend une particule présentant une sphéricité, c'est-à-dire un rapport entre son plus petit diamètre et son plus grand diamètre, supérieure à 0,6, quelle que soit la façon par laquelle cette sphéricité a été obtenue. De préférence les billes selon l'invention présentent une sphéricité supérieure à 0,7.
- On appelle « taille » d'une bille (ou d'une particule) la moyenne de sa plus grande dimension dM et de sa plus petite dimension dm : (dM+dm)/2.
- Par « bille fondue », ou plus largement « particule fondue », on entend une bille (ou particule) solide obtenue par solidification par refroidissement d'une matière en fusion.
- Une « matière en fusion » est une masse liquide qui peut contenir quelques particules solides, mais en une quantité insuffisante pour qu'elles puissent structurer ladite masse. Pour conserver sa forme, une matière en fusion doit être contenue dans un récipient.
- Par « impuretés », on entend les constituants inévitables, introduits nécessairement avec les matières premières. En particulier les composés faisant partie du groupe des oxydes, nitrures, oxynitrures, carbures, oxycarbures, carbonitrures et espèces métalliques de sodium et autres alcalins, fer, vanadium et chrome sont des impuretés. A titre d'exemples, on peut citer $CaO$, $Fe_2O_3$ ou $Na_2O$. Le carbone résiduel fait partie des impuretés de la composition des produits selon l'invention. En revanche, l'oxyde d'hafnium n'est pas considéré comme une impureté.
- Dans un produit obtenu par fusion, $HfO_2$ n'est pas chimiquement dissociable de $ZrO_2$. Dans la composition chimique d'un tel produit, $ZrO_2+HfO_2$ désigne donc la teneur totale de ces deux oxydes. Cependant, selon la présente invention, $HfO_2$ n'est pas ajouté volontairement dans la charge de départ. $HfO_2$ ne désigne donc que les traces d'oxyde d'hafnium, cet oxyde étant toujours naturellement présent dans les sources de zircone à des teneurs généralement inférieures à 2%. Par souci de clarté, on peut donc désigner indifféremment la teneur en zircone et en trace d'oxyde d'hafnium par $ZrO_2+HfO_2$ ou par $ZrO_2$, on encore par « teneur en zircone ».
- Par « précurseur » d'un oxyde, on entend un constituant apte à fournir ledit oxyde lors de la fabrication d'une particule selon l'invention.

Tous les pourcentages de la présente description sont des pourcentages en masse sur la base des oxydes, sauf mention contraire.

D'autres caractéristiques et avantages apparaîtront encore à la lecture de la description détaillée qui va suivre.

## Description détaillée

Procédé

Pour fabriquer un produit selon un mode de réalisation de l'invention, on peut procéder suivant les étapes a) à c) mentionnées précédemment.

Ces étapes sont classiques, sauf en ce qui concerne la composition de la charge de départ, et l'homme du métier sait les adapter en fonction de l'application visée.

On décrit à présent un mode de réalisation préféré de ce procédé.

A l'étape a), la charge de départ est formée des oxydes indiqués ou de précurseurs de ceux-ci. De préférence, on utilise du sable de zircon naturel $ZrSiO_4$ titrant environ 66% de $ZrO_2$ et 33% de $SiO_2$, plus des impuretés. L'apport de $ZrO_2$ par l'intermédiaire du zircon est en effet beaucoup plus économique qu'une addition de $ZrO_2$.

L'ajustement des compositions peut se faire par addition d'oxydes purs, de mélanges d'oxydes ou de mélanges de précurseurs de ces oxydes, notamment par addition de $ZrO_2$, $SiO_2$, $MgO$, $Y_2O_3$, $CeO_2$ et $Al_2O_3$.

Selon l'invention, l'homme du métier ajuste la composition de la charge de départ de manière à obtenir, à l'issue de l'étape c), des particules conformes à l'invention. L'analyse chimique des particules en céramique fondues selon l'invention est généralement sensiblement identique à celle de la charge de départ. En outre, le cas échéant, par exemple pour tenir compte de la présence d'oxydes volatils, ou pour tenir compte de la perte en $SiO_2$ lorsque la fusion est opérée dans des conditions réductrices, l'homme du métier sait comment adapter la composition de la charge de départ en conséquence.

De préférence, aucune matière première autre que $ZrO_2+HfO_2$, $SiO_2$, $MgO$, $Al_2O_3$, $Y_2O_3$, $CeO_2$ et leurs précurseurs n'est introduite volontairement dans la charge de départ, les autres oxydes présents étant des impuretés.

A l'étape b), la charge de départ est fondue, de préférence dans un four à arc électrique. L'électrofusion permet en effet la fabrication de grandes quantités de particules (de préférence sous la forme de billes) avec des rendements intéressants. Mais tous les fours connus sont envisageables, comme un four à induction ou un four à plasma, pourvu qu'ils permettent de faire fondre sensiblement complètement la charge de départ.

A l'étape c), un filet du liquide en fusion est dispersé en petites gouttelettes liquides qui, par suite de la tension superficielle, prennent, pour la majorité d'entre elles, une forme sensiblement sphérique. Cette dispersion peut être opérée par soufflage, notamment avec de l'air et/ou de la vapeur d'eau, ou par tout autre procédé d'atomisation d'une matière en fusion, connu de l'homme de l'art. Une particule en céramique fondue d'une taille de 0,005 à 4 mm peut être ainsi produite.

Le refroidissement résultant de la dispersion conduit à la solidification des gouttelettes liquides. On obtient alors des particules, notamment des billes, solides selon l'invention.

Tout procédé conventionnel de fabrication de particules fondues, notamment de billes fondues, peut être mis en oeuvre, pourvu que la composition de la charge de départ permette d'obtenir des particules présentant une composition conforme à celle des particules selon l'invention. Par exemple, il est possible de fabriquer un bloc fondu et coulé, puis de le broyer et, le cas échéant, d'effectuer une sélection granulométrique.

Particules

Une particule céramique fondue selon l'invention présente la composition chimique suivante, en pourcentages en masse sur la base des oxydes et pour un total de 100% :

$$50\ \% < ZrO_2 + HfO_2 < 70\% \ ;$$

$$10\ \% < SiO_2 < 30\% \ ;$$

$$6,5\% < MgO < 9,5\% \ ;$$

$Al_2O_3$ en une quantité telle que le rapport en masse MgO / $Al_2O_3$ soit compris entre 2,4 et 6,6 ;

$$2\ \blacksquare 0,25\ \% \ \blacksquare\ 2\ \ \sout{0,1\%}\ < Y_2O_3 \ ;$$

$$CeO_2 < 10\% \ ;$$

et moins de 0,6% d'autres oxydes.

En particulier lorsque le rapport en masse MgO/$Al_2O_3$ est compris entre 4 et 5, et notamment lorsque le rapport en masse MgO/$Al_2O_3$ est d'environ 4,2, et notamment lorsque $CeO_2$ < 0,6%, il est préférable que la teneur en oxyde d'yttrium $Y_2O_3$ soit comprise entre 0,25 % et 5% pour favoriser la résistance à l'usure, et qu'elle soit comprise entre 1,7% et 5,5% pour favoriser la résistance à la casse. Pour les applications mentionnées ci-dessus, et notamment pour une application de broyage, lorsque le rapport en masse MgO/$Al_2O_3$ est compris entre 4 et 5, et notamment lorsque le rapport en masse MgO/$Al_2O_3$ est d'environ 4,2 et/ou lorsque $CeO_2$ < 0,6%, une teneur en oxyde d'yttrium $Y_2O_3$ comprise entre 1,7% et 5%, et plus encore comprise entre 2,5% et 5%, est considérée comme optimale. Une teneur en oxyde d'yttrium $Y_2O_3$ d'environ 4,1% est préférée.

Dans un mode de réalisation, la teneur massique en oxyde d'yttrium $Y_2O_3$ est inférieure à 6,0%, voire inférieure à 5,5%, et le rapport en masse MgO/$Al_2O_3$ est supérieur à 5 ou supérieur à 6, ou inférieur à 4 ou inférieur à 3.

Un effet technique sur la résistance à la casse a pu être associé, dans le cadre d'une composition selon l'invention, à la présence d'oxyde d'yttrium, même en faible quantité. De préférence, la teneur massique en oxyde d'yttrium $Y_2O_3$ est supérieure à 0,6%, supérieure à 1,7%, supérieure à 2,5%, supérieure à 3,0%, supérieure à 3,5%, voire supérieure à 3,8%.

Une quantité trop élevée d'oxyde d'yttrium $Y_2O_3$ conduit cependant à une augmentation sensible du coût de fabrication des particules. En outre, le compromis entre la résistance à la casse et la résistance à l'usure se dégrade. De préférence, et notamment lorsque $CeO_2$ < 0,6%, la teneur massique en oxyde d'yttrium $Y_2O_3$ est inférieure à 7,2%, inférieure à 7,0%, inférieure à 6,5%, inférieure à 6,0%, inférieure à 5,5%, inférieure à 5,0%, inférieure à 4,5%, voire inférieure à 4,2%.

De préférence également, une particule en céramique fondue selon l'invention présente un rapport en masse

MgO/Al$_2$O$_3$ supérieur à 3, de préférence supérieur à 3,5, de préférence supérieur à 3,7, de préférence supérieur à 4,0, voire supérieur à 4,2.

De préférence également, une particule en céramique fondue selon l'invention présente un rapport en masse MgO/Al$_2$O$_3$ inférieur à 6, de préférence inférieur à 5,5, de préférence inférieur à 5, voire inférieur à 4,5. De préférence, le rapport en masse MgO/Al$_2$O$_3$ est sensiblement de 4,25.

Une particule en céramique fondue selon l'invention comprend de préférence une teneur massique de MgO supérieure à 7%, supérieure à 7,5%, de préférence supérieure à 8%, voire supérieure à 8,5%. Elle comprend de préférence une teneur massique de MgO inférieure à 9,3%, voire inférieure à 9%.

De même, une particule en céramique fondue selon l'invention comprend de préférence une teneur massique de Al$_2$O$_3$ supérieure à 1,2%, de préférence supérieure à 1,4%, de préférence supérieure à 1,6%, de préférence supérieure à 1,8%. La teneur massique de Al$_2$O$_3$ est de préférence inférieure à 3,2%, inférieure à 2,8%, de préférence inférieure à 2,5%, de préférence inférieure à 2,2%.

Les teneurs en zircone et en silice influencent également les performances d'une particule selon l'invention.

De préférence, une particule en céramique fondue selon l'invention comprend une teneur massique de ZrO$_2$ supérieure à 56%, voire supérieure à 58%. De préférence, cette teneur massique est inférieure à 68%, de préférence inférieure à 65%, voire inférieure à 62%, voire inférieure à 61%, ou encore inférieure à 60%.

De préférence, une particule en céramique fondue selon l'invention comprend une teneur massique de SiO$_2$ supérieure à 15%, de préférence supérieure à 16%, supérieure à 18%, de préférence supérieure à 20%, de préférence encore supérieure à 22%, de préférence supérieure à 25%. De préférence, cette teneur massique est inférieure à 29%, de préférence inférieure à 28%, voire inférieure à 27%.

CeO$_2$ peut être une impureté. Dans ce cas, de préférence, CeO$_2$ < 0,6%. De préférence encore, la teneur en CeO$_2$ est inférieure à 0,5%, en pourcentages massiques sur la base des oxydes. En variante, dans des applications où une densité élevée est avantageuse, CeO$_2$ est ajouté volontairement, et de préférence sa teneur est supérieure à 1%, de préférence encore supérieure à 6%. De préférence encore, sa teneur est inférieure à 9,5 %. Une teneur d'environ 9% est considérée comme optimale.

Les « autres oxydes » ne sont de préférence présents que sous forme d'impuretés. On considère qu'une teneur totale en « autres oxydes » inférieure à 0,6% ne modifie pas substantiellement les résultats obtenus. Cependant, de préférence, la teneur en « autres oxydes », en pourcentage en masse sur la base des oxydes, est inférieure à 0,5%, de préférence inférieure à 0,45%, voire inférieure à 0,3%, ou inférieure à 0,1%.

De préférence, la teneur totale en impuretés, en pourcentage en masse sur la base des oxydes, est inférieure à 0,5%, de préférence inférieure à 0,45%.

De préférence toujours, la teneur en oxydes d'une particule selon l'invention représente plus de 99,5%, de préférence plus de 99,9%, et, de préférence encore, sensiblement 100% de la masse totale de ladite particule.

Une particule selon l'invention préférée présente la composition chimique suivante, en pourcentages en masse sur la base des oxydes et pour un total de 100% :

$$56\% < ZrO_2 + HfO_2 < 62\%, \text{ de préférence } 58\% < ZrO_2 + HfO_2 < 61\%;$$

$$15\% < SiO_2 < 28\%;$$

$$8\% < MgO < 9,5\% \text{ ;}$$

Al$_2$O$_3$ en une quantité telle que le rapport en masse MgO / Al$_2$O$_3$ soit compris entre 4,2 et 5 ; 0,25 % < Y$_2$O$_3$, de préférence Y$_2$O$_3$ < 7%, de préférence 0,25 % < Y$_2$O$_3$ < 6%, de préférence encore 0,6% < Y$_2$O$_3$ < 5,5%, de préférence toujours 1,7% < Y$_2$O$_3$ < 5% ;

CeO$_2$ < 10%, en particulier dans les variantes où CeO$_2$ est une impureté (et notamment CeO$_2$ <0,6%, voire CeO$_2$ <0,5%), et où 1% < CeO$_2$ (de préférence 6% < CeO$_2$) et CeO$_2$ < 9,5%; et

moins de 0,5% d'autres oxydes.

Une particule en céramique fondue selon l'invention peut en particulier présenter une taille inférieure à 4 mm et/ou supérieure à 0,005 mm.

D'autres formes que celles des « billes » sont possibles selon l'invention, mais la forme sensiblement sphérique est préférée.

Les particules fondues selon l'invention sont très résistantes à la casse et à l'usure.

Sans être liés par une théorie, les inventeurs expliquent ces performances par l'amélioration de la cohésion des cristaux de zircone avec la phase vitreuse (verre de silice).

Les particules en céramique fondues selon l'invention sont particulièrement bien adaptées comme agents de broyage et de dispersion en milieu humide, ainsi que pour le traitement de surfaces. L'invention concerne donc également l'utilisation d'une pluralité de particules, notamment de billes selon l'invention, ou de billes fabriquées suivant un procédé selon l'invention, en tant qu'agents de broyage, agents de dispersion en milieu humide, ou pour le traitement de surfaces.

On peut noter cependant que les propriétés des billes, notamment leur résistance, leur densité, ainsi que leur facilité d'obtention, peuvent les rendre aptes à d'autres applications, notamment comme agents de broyage à sec, de soutènement et d'échange thermique.

**Exemples**

Les exemples non limitatifs suivants sont donnés dans le but d'illustrer l'invention.

Protocoles de mesure

Les méthodes suivantes ont été utilisées pour déterminer certaines propriétés de différents mélanges de billes en céramique fondues. Elles permettent une excellente simulation du comportement réel en service dans l'application de broyage.

Pour déterminer la résistance à l'usure, 20 ml (volume mesuré à l'aide d'une éprouvette graduée) de billes à tester de taille comprise entre 0,8 et 1 mm, sont pesées (masse $m_0$) et introduites dans un des 4 bols revêtus d'alumine frittée dense, de contenance de 125 ml, d'un broyeur planétaire rapide du type PM400 de marque RETSCH. Sont ajoutés dans le même bol contenant déjà les billes, 2,2 g de carbure de silicium de marque Presi (présentant une taille médiane D50 de 23 $\mu$m) et 40 ml d'eau. Le bol est refermé et mis en rotation (mouvement planétaire) à 400 tr/min avec inversion du sens de rotation toutes les minutes pendant 1h30. Le contenu du bol est ensuite lavé sur un tamis de 100 $\mu$m de manière à enlever le carbure de silicium résiduel ainsi que les arrachements de matière dus à l'usure lors du broyage. Après un tamisage sur un tamis de 100$\mu$m, les particules sont ensuite séchées à l'étuve à 100 °C pendant 3h puis pesées (masse m).

L'usure est exprimée en pourcentage (%) et est égale à la perte de masse des billes ramenée à la masse initiale des billes, soit :

$$100(m_0-m) / (m_0)$$

Pour tester la résistance à la casse des billes, il convient de se placer dans des conditions extrêmes pouvant conduire à des phénomènes de casse dans un broyeur en fonctionnement normal.

Un broyeur pressurisé de type horizontal est muni de doigts sur le rotor et de contre-doigts sur l'intérieur de la cuve. Ce broyeur, d'un volume de 1,2 litre, est chargé à 50% volumique en billes de la granulométrie étudiée (volume apparent), ce qui correspond à une masse initiale de billes $m_i$.

Avant la mise en rotation du broyeur et pour toute la durée de l'essai, l'enceinte est alimentée en eau avec un débit de 6 l/h. La vitesse linéaire en extrémité des doigts du rotor est fixée à 7,3 m/s pendant 30 minutes.

Une fois l'essai terminé, les billes sont extraites de la cuve, séchées puis tamisées. L'ensemble des billes est trié manuellement pour extraire les billes cassées, qui sont ensuite pesées. La masse de billes cassées est égale à $m_{bc}$. Le pourcentage de billes cassées est égale à $100*m_{bc} / m_i$.

Protocole de fabrication

Dans les exemples, on utilise pour la charge de départ une composition à base de zircon, et on ajoute de l'oxyde de magnésium, de l'oxyde d'yttrium et de l'oxyde d'aluminium. Cette charge de départ est fondue dans un four électrique à arc de type Héroult. La matière en fusion est alors dispersée en billes par soufflage d'air comprimé.

On effectue plusieurs cycles fusion/coulée en ajustant notamment les teneurs en oxydes de magnésium, d'yttrium et d'aluminium.

Les billes les plus sollicitées à la casse en application étant les billes de taille supérieure à 1,6 mm, le test de résistance à la casse décrit précédemment a été effectué sur la tranche granulométrique 1,6 à 2,5 mm.

Résultats

Les résultats obtenus sont résumés dans le tableau 1 suivant.

Tableau 1

| Ex. | ZrO$_2$+ HfO$_2$ en % | SiO$_2$ en % | MgO en % | Al$_2$O$_3$ en % | Y$_2$O$_3$ en % | Autres oxydes en % | MgO/ Al$_2$O$_3$ | M$_i$ en gr | M$_{bc}$ en gr | % de billes cassées | Amélioration de la casse en % par rapport à | | | Usure en % |
|---|---|---|---|---|---|---|---|---|---|---|---|---|---|---|
| | | | | | | | | | | | Réf. 1 | Réf. 2 | Réf. 3 | |
| Réf. 1 | 69,6 | 29,3 | 0,01 | 0,74 | 0,09 | 0,26 | 0,01 | 1365,7 | 11,06 | 0,81 | - | - | | 8,24 |
| Réf. 2 | 61,5 | 27,3 | 8,57 | 2,22 | 0,08 | 0,33 | 3,86 | 1387,2 | 5,13 | 0,37 | 54,32 | - | | 3,74 |
| 1 | 60,9 | 26,7 | 9,13 | 2,03 | 0,87 | 0,37 | 4,5 | 1388,4 | 3,47 | 0,25 | 69,14 | 32,43 | | 2,31 |
| 2 | 61,2 | 25,8 | 8,86 | 2,1 | 1,76 | 0,28 | 4,22 | 1390,7 | 2,36 | 0,17 | 79,01 | 54,05 | | 2,06 |
| 3 | 59,1 | 26,7 | 8,94 | 2,05 | 2,81 | 0,4 | 4,36 | 1385,6 | 1,80 | 0,13 | 83,95 | 64,86 | | 1,68 |
| 4 | 58,4 | 26,3 | 8,76 | 2,06 | 4,06 | 0,42 | 4,25 | 1391,2 | 1,67 | 0,12 | 85,19 | 67,57 | | 1,67 |
| 5 | 56,1 | 25,7 | 8,61 | 2,18 | 7,1 | 0,31 | 3,95 | 1392,3 | 5,15 | 0,37 | 54,32 | 0 | | 2,52 |
| Réf. 3 | 60,9 | 27,1 | 8,73 | 2,83 | 0,09 | 0,35 | 3,08 | 1385,6 | 9 | 0,65 | 19,75 | - | - | 3,81 |
| 6 | 59 | 27,2 | 9,06 | 2,88 | 1,59 | 0,27 | 3,15 | 1389,6 | 3,2 | 0,33 | 71,6 | - | 49,23 | 2,13 |
| 7 | 63,8 | 28,4 | 5,52 | 1,37 | 0,62 | 0,29 | 4,03 | 1388,8 | 5,83 | 0,42 | - | -13,51 | | 3,51 |
| 8 | 55 | 24,7 | 10,52 | 2,53 | 7,02 | 0,23 | 4,16 | 1393,1 | 5,57 | 0,4 | - | -8,11 | | 3,33 |
| 9 | 62,1 | 27 | 6,73 | 3,21 | 0,64 | 0,32 | 2,10 | 1387,9 | 7,08 | 0,51 | - | -37,84 | | 3,42 |
| 10 | 58,4 | 25,6 | 7,81 | 1,03 | 6,78 | 0,38 | 7,58 | 1392,7 | 6,27 | 0,45 | - | -21,62 | | 2,83 |

Les billes de référence de l'exemple « Réf. 1 », hors invention, sont des billes couramment utilisées dans les applications de broyage. Les billes de référence des exemples « Réf. 2 » et « Réf. 3 », font l'objet de la demande internationale FR2007/052127.

La résistance à la casse des billes de l'exemple Réf. 2, pour lequel le rapport MgO/Al$_2$O$_3$ est supérieur à 3,5 est supérieure à celle des billes de l'exemple Réf. 3.

Les billes des exemples 7 à 10 sont des exemples hors invention.

On considère que les résultats sont particulièrement satisfaisants si les billes présentent :

-   une amélioration de la résistance à la casse d'au moins 10% par rapport à celle de la référence et

-   une amélioration de la résistance à l'usure d'au moins 10% par rapport à celle de la référence.

Les exemples 1 à 6 montrent que, de façon surprenante, les billes selon l'invention testées présentent des performances remarquables par rapport aux billes de référence, aussi bien en ce qui concerne la résistance à l'usure qu'en ce qui concerne la résistance à la casse, à l'exception de l'exemple 5 pour lequel seule une amélioration de la résistance à l'usure est obtenue. L'exemple 5 montre ainsi qu'un ajout excessif d'oxyde d'yttrium est nuisible à la résistance à la casse.

L'exemple 7, hors invention, montre que pour un rapport MgO/Al$_2$O$_3$ de l'ordre de 4, une teneur en MgO d'environ 5,5 % ne permet pas d'améliorer la résistance à la casse.

L'exemple 8, hors invention, montre cependant que pour un rapport MgO/Al$_2$O$_3$ de l'ordre de 4, une teneur en MgO d'environ 10,5% ne permet pas d'améliorer la résistance à la casse.

Les exemples 9 et 10, hors invention, illustrent la nécessité que le rapport MgO/Al$_2$O$_3$ soit compris entre 2,4 et 6,6 pour améliorer la résistance à la casse.

La composition des billes de l'exemple 4 est la préférée d'entre toutes.

Bien entendu, la présente invention n'est pas limitée aux modes de réalisation décrits fournis à titre d'exemples illustratifs et non limitatifs.

**Revendications**

1.   Particule céramique fondue présentant la composition chimique suivante, en pourcentages en masse sur la base des oxydes et pour un total de 100% :

$$50\ \% < ZrO_2 + HfO_2 < 70\% \ ;$$

$$10\ \% < SiO_2 < 30\% \ ;$$

$$6,5\% < MgO < 9,5\% \ ;$$

Al$_2$O$_3$ en une quantité telle que le rapport en masse MgO / Al$_2$O$_3$ soit compris entre 2,4 et 6,6 ;

$$0,25\% < Y_2O_3 \ ;$$

$$CeO_2 < 10\% \ ;$$

et moins de 0,6% d'autres oxydes,
dans laquelle HfO$_2$ ne désigne que des traces d'oxyde d'hafnium, cet oxyde étant toujours naturellement présent dans les sources de zircone à des teneurs généralement inférieures à 2%.

2.   Particule selon la revendication 1, dans laquelle la teneur en Y$_2$O$_3$, en pourcentage en masse sur la base des oxydes, est inférieure à 7,0%.

3.   Particule selon la revendication précédente, dans laquelle la teneur en Y$_2$O$_3$, en pourcentage en masse sur la base des oxydes, est inférieure à 6%.

**4.** Particule selon la revendication précédente, dans laquelle la teneur en $Y_2O_3$, en pourcentage en masse sur la base des oxydes, est supérieure à 0,6% et inférieure à 5,5%.

**5.** Particule selon la revendication précédente, dans laquelle la teneur en $Y_2O_3$, en pourcentage en masse sur la base des oxydes, est supérieure à 1,7% et inférieure à 5%.

**6.** Particule selon l'une quelconque des revendications précédentes, dans laquelle la teneur en $ZrO_2$, en pourcentage en masse sur la base des oxydes, est supérieure à 56% et inférieure à 62%.

**7.** Particule selon l'une quelconque des revendications précédentes, dans laquelle la teneur en $SiO_2$, en pourcentage en masse sur la base des oxydes, est supérieure à 15% et inférieure à 28%.

**8.** Particule selon l'une quelconque des revendications précédentes, dans laquelle la teneur en MgO, en pourcentage en masse sur la base des oxydes, est supérieure à 8%.

**9.** Particule selon l'une quelconque des revendications précédentes, dans laquelle le rapport en masse MgO / $Al_2O_3$ est supérieur ou égal à 4,2 et inférieur ou égal à 5.

**10.** Particule selon l'une quelconque des revendications précédentes, présentant la composition chimique suivante, en pourcentages en masse sur la base des oxydes et pour un total de 100% :

$$56\% < ZrO_2 + HfO_2 < 62\% ;$$

$$15\% < SiO_2 < 28\% ;$$

$$8\% < MgO < 9,5\% ;$$

$Al_2O_3$ en une quantité telle que le rapport en masse MgO / $Al_2O_3$ soit compris entre 4,2 et 5 ;

$$Y_2O_3 < 5\% ;$$

$$CeO_2 < 10\% ;$$

et moins de 0,5% d'autres oxydes.

**11.** Particule selon la revendication précédente, comportant plus de 0,6% d'oxyde d'yttrium.

**12.** Particule selon l'une quelconque des revendications précédentes, présentant une teneur en $CeO_2$ inférieure à 0,6%.

**13.** Particule selon l'une quelconque des revendications 1 à 11, présentant une teneur en $CeO_2$ supérieure à 6%.

**14.** Procédé de fabrication d'un ensemble de particules selon l'une quelconque des revendications précédentes, comprenant les étapes successives suivantes :

   a) mélange de matières premières pour former une charge de départ ;
   b) fusion de la charge de départ jusqu'à obtention d'une matière en fusion,
   c) dispersion de ladite matière en fusion sous forme de gouttelettes liquides et solidification de ces gouttelettes liquides sous forme de particules solides,

procédé dans lequel les matières premières sont choisies à l'étape a) de manière que les particules obtenues à l'étape c) soient conformes à l'une quelconque des revendications précédentes, de l'oxyde d'yttrium étant ajouté de façon volontaire et systématique dans la charge de départ, sous la forme oxyde ou précurseur de l'oxyde.

**15.** Utilisation d'une pluralité de particules selon l'une quelconque des revendications 1 à 13 ou fabriquées suivant un procédé conforme à la revendication précédente, en tant qu'agents de broyage, agents de dispersion en milieu humide, agents de soutènement, agents d'échange thermique, ou pour le traitement de surfaces.

**Patentansprüche**

**1.** Keramisches geschmolzenes Teilchen, die die folgende chemische Zusammensetzung aufweisen, in Gewichtsprozenten auf Basis der Oxide und für eine Summe von 100 % :

$$50 \% < ZrO_2 + HfO_2 < 70 \% \; ;$$

$$10 \% < SiO_2 < 30 \% \; ;$$

$$6,5 \% < MgO < 9,5 \% \; ;$$

$Al_2O_3$ in einer Menge, so dass das Massenverhältnis $MgO / Al_2O_3$ zwischen 2,4 und 6,6 enthalten ist;

$$0,25 \% < Y_2O_3 \; ,$$

$$CeO_2 < 10 \% \; ;$$

und weniger als 0,6 % an anderen Oxiden,
wobei $HfO_2$ nur für Spuren von Hafniumoxid steht, und dieses Oxid immer natürlich in den Zirkonquellen vorhanden ist in Gehältern von generell geringer als 2 %.

**2.** Teilchen nach Anspruch 1, wobei der Gehalt an $Y_2O_3$, in Gewichtsprozenten auf Basis der Oxide, geringer ist als 7,0 %.

**3.** Teilchen nach dem vorhergehenden Anspruch, wobei der Gehalt an $Y_2O_3$, in Gewichtsprozenten auf Basis der Oxide, geringer ist als 6 %.

**4.** Teilchen nach dem vorhergehenden Anspruch, wobei der Gehalt an $Y_2O_3$, in Gewichtsprozenten auf Basis der Oxide, größer als 0,6 % und geringer als 5,5 % ist.

**5.** Teilchen nach dem vorhergehenden Anspruch, wobei der Gehalt an $Y_2O_3$, in Gewichtsprozenten auf Basis der Oxide, größer als 1,7 % und geringer als 5 % ist.

**6.** Teilchen nach einem der vorhergehenden Ansprüche, wobei der Gehalt an $ZrO_2$, in Gewichtsprozenten auf Basis der Oxide, größer als 56 % und geringer als 62 % ist.

**7.** Teilchen nach einem der vorhergehenden Ansprüche, wobei der Gehalt an $SiO_2$, in Gewichtsprozenten auf Basis der Oxide, größer als 15 % und geringer als 28 % ist.

**8.** Teilchen nach einem der vorhergehenden Ansprüche, wobei der Gehalt an MgO, in Gewichtsprozenten auf Basis der Oxide, größer als 8 % ist.

**9.** Teilchen nach einem der vorhergehenden Ansprüche, wobei das Massenverhältnis $MgO / Al_2O_3$ größer als oder gleich 4,2 und geringer als oder gleich 5 ist.

**10.** Teilchen nach einem der vorhergehenden Ansprüche, die die folgende chemische Zusammensetzung aufweisen, in Gewichtsprozenten auf Basis der Oxide und für eine Summe von 100 % :

$$56\ \% < ZrO_2 + HfO_2 < 62\ \% \ ;$$

$$15\ \% < SiO_2 < 28\ \% \ ,$$

$$8\ \% < MgO < 9,5\ \% \ ;$$

$Al_2O_3$ in einer Menge, so dass das Massenverhältnis $MgO$ / $Al_2O_3$ zwischen 4,2 und 5 enthalten ist;

$$Y_2O_3 < 5\ \% \ ;$$

$$CeO_2 < 10\ \% \ ;$$

und weniger als 0,5 % an anderen Oxiden.

11. Teilchen nach dem vorhergehenden Anspruch, enthaltend mehr als 0,6 % Yttriumoxid.

12. Teilchen nach einem der vorhergehenden Ansprüche, aufweisend einen Gehalt an $CeO_2$ von geringer als 0,6 %.

13. Teilchen nach einem der Ansprüche 1 bis 11, aufweisend einen Gehalt an $CeO_2$ von größer als 6 %.

14. Verfahren der Produktion einer Gesamtheit von Teilchen nach einem der vorhergehenden Ansprüche, umfassend die folgenden aufeinanderfolgenden Schritte.

    a) Mischen der ersten Materien um eine Ausgangscharge zu bilden ;
    b) Schmelzen der Ausgangscharge bis zum Erhalt einer schmelzflüssigen Materie,
    c) Dispergieren der besagten schmelzflüssigen Materie in Form von flüssigen Tröpfchen und Erkalten dieser flüssigen Tröpfchen in Form von festen Teilchen,

wobei in dem Verfahren die ersten Materien im Schritt a) derart ausgewählt sind, dass die im Schritt c) erhaltenen Teilchen einem der vorhergehenden Ansprüche entsprechend sind, wobei Yttriumoxid in absichtlicher und systematischer Weise der Ausgangscharge hinzugefügt ist in Form von Oxid oder Oxid-Vorläufer.

15. Verwendung einer Vielzahl von Teilchen nach einem der Ansprüche 1 bis 13 oder produziert nach einem dem vorhergehenden Anspruch entsprechenden Verfahren, als Mahlmittel, Mittel zum Dispergieren in feuchtem Medium, Stützmittel, Wärmetauschmittel oder für die Oberflächenbehandlung.

**Claims**

1. A fused ceramic particle having the following chemical composition, in percentages by weight based on the oxides and for a total of 100%:

$$50\% \ < \ ZrO_2 + HfO_2 \ < \ 70\%;$$

$$10\% \ < \ SiO_2 \ < \ 30\%;$$

$$6.5\% \ < \ MgO \ < \ 9.5\%;$$

$Al_2O_3$ in a quantity such that the $MgO/Al_2O_3$ weight ratio ranges between 2.4 and 6.6;

$$0.25\% < Y_2O_3;$$

$$CeO_2 < 10\%;$$

and less than 0.6% of other oxides,
wherein $HfO_2$ denotes only traces of hafnium oxide, this oxide always being naturally present in sources of zirconia in quantities generally less than 2%.

2. A particle according to claim 1, wherein the $Y_2O_3$ content, as a percentage by weight based on the oxides, is more than 0.25% and less than 7.0%.

3. A particle according to the preceding claim, wherein the $Y_2O_3$ content, as a percentage by weight based on the oxides, is less than 6%.

4. A particle according to the preceding claim, wherein the $Y_2O_3$ content, as a percentage by weight based on the oxides, is more than 0.6% and less than 5.5%.

5. A particle according to the preceding claim, wherein the $Y_2O_3$ content, as a percentage by weight based on the oxides, is more than 1.7% and less than 5%.

6. A particle according to anyone of the preceding claims, wherein the $ZrO_2$ content, as a percentage by weight based on the oxides, is more than 56% and less than 62%.

7. A particle according to anyone of the preceding claims, wherein the $SiO_2$ content, as a percentage by weight based on the oxides, is more than 15% and less than 28%.

8. A particle according to anyone of the preceding claims, wherein the MgO content, as a percentage by weight based on the oxides, is more than 8%.

9. A particle according to anyone of the preceding claims, wherein the $MgO/Al_2O_3$ weight ratio is greater than or equal to 4.2 and less than or equal to 5.

10. A particle according to anyone of the preceding claims, having the following chemical composition, in percentages by weight based on the oxides and for a total of 100%:

$$56\% < ZrO_2+HfO_2 < 62\%;$$

$$15\% < SiO_2 < 28\%;$$

$$8\% < MgO < 9.5\%;$$

$Al_2O_3$ in a quantity such that the $MgO/Al_2O_3$ weight ratio ranges between 4.2 and 5;

$$Y_2O_3 < 5\%;$$

$$CeO_2 < 10\%;$$

and less than 0.5% of other oxides.

11. A particle according to the preceding claim, comprising more than 0.6% of yttrium oxide.

**12.** A particle according to anyone of the preceding claims, having a $CeO_2$ content of less than 0.6%.

**13.** A particle according to anyone of the claims 1 to 11, having a $CeO_2$ content of more than 6%.

**14.** A method of producing a set of particles according to anyone of the preceding claims, comprising the following steps in succession:

    a) mixing starting materials to form a starting charge;
    b) melting the starting charge until a molten material is obtained;
    c) dispersing said molten material in the form of liquid droplets, and solidifying said liquid droplets in the form of solid particles;

in which method the starting materials are selected in step a) such that the particles obtained in step c) are in accordance with anyone of the preceding claims, yttrium oxide being added deliberately and systematically to the starting charge in the form of the oxide or oxide precursor.

**15.** Use of a plurality of particles according to anyone of claims 1 to 13 or produced using a method in accordance with the preceding claim, as milling agents, wet medium dispersion agents, propping agents, heat exchange agents, or for the treatment of surfaces.

**EP 2 262 748 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2320276
- EP 0662461 A
- WO 2008043966 A
- FR 2007052127